(19)

Europäisches
Patentamt
European
Patent Office
Office européen
des brevets

(11) **EP 2 247 044 A1**

(12) **EUROPEAN PATENT APPLICATION**

(43) Date of publication:
**03.11.2010 Bulletin 2010/44**

(51) Int Cl.:
***H04L 12/56*** *(2006.01)*

(21) Application number: **09360023.7**

(22) Date of filing: **29.04.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(71) Applicant: **Alcatel Lucent**
**75008 Paris (FR)**

(72) Inventor: **Wang, Yalou**
**Swindon SN5 5XN (GB)**

(74) Representative: **Leppard, Andrew John et al**
**Bryer, Shelley, John Amor, Greenwood LLP**
**7 Gay Street**
**Bath BA1 2PH (GB)**

Remarks:
Amended claims in accordance with Rule 137(2) EPC.

(54) **Packet network processing node and method**

(57)     A packet network processing node for processing received data packets into a plurality of data packet flows for onward transmission and a method are disclosed. The packet network processing node is for processing received data packets into a plurality of data packet flows for onward transmission. The packet network processing node comprises: flow identification logic operable to determine a flow characteristic of each data packet flow (S10); a plurality of buffers, each buffer being operable to buffer data packets associated with a different data packet flow (S20); and buffer control logic operable to adjust a size of each buffer in response to said flow characteristic of that associated data packet flow (S30). Adaptive buffer size control is possible since the size of each buffer can be varied dynamically, based on the flow characteristics of the particular data packet flow. Hence, the size of each buffer no longer needs to be fixed, but instead can vary in response to the flow characteristics. The size of the buffers may be increased when required to enable the buffers to avoid overflow, likewise the size of the buffers may be decreased in response to the flow characteristic in order to avoid the unnecessary allocation of resources. Furthermore, by providing a plurality of buffers, each of which buffers a separate data flow, the size of the buffer or other statistical information relating to the buffer which may be required for flow control purposes can readily be established.

FIG 1

**Description**

FIELD OF THE INVENTION

The present invention relates to a packet network processing node for processing received data packets into a plurality of data packet flows for onward transmission and a method.

BACKGROUND

Packet network processing nodes are known. Such nodes are provided in packet switched networks where information to be transmitted through the network is packetised and these individual data packets are independently routed through the network from node to node. In a typical arrangement, data packets will be received at a node from different sources. Also, data packets from the same source will arrive at a node at different times. The incoming data packets are typically classified into different data flows, dependent on the data type or individual bearer needs. Each data flow is then stored in a buffer. These buffers are then serviced according to a buffer servicing scheme (such as weighted round-robin or weighted fair-queuing, etc.) and the selected data packets are transmitted onward.
Whilst this approach enables data packets to be received and the packet flows processed, undesirable consequences can occur.
Accordingly, it is desired to provide an improved technique for processing received data packets.

SUMMARY

According to a first aspect, there is provided a packet network processing node for processing received data packets into a plurality of data packet flows for onward transmission, the packet network processing node comprising: flow identification logic operable to determine a flow characteristic of each data packet flow; a plurality of buffers, each buffer being operable to buffer data packets associated with a different data packet flow; and buffer control logic operable to adjust a size of each buffer in response to the flow characteristic of that associated data packet flow.
The first aspect recognises that, due to packet network processing node hardware constraints, the sum of the total size of the buffers will always be limited and that not providing large enough buffers will cause buffer overflow, resulting in lost packets. However, providing buffers which are too large is a waste of resource. Accordingly, setting a buffer size requires a careful balance to be achieved. One approach to help ensure correct buffer size may be to model the expected operation of the buffers. However, each data packet flow can have unpredictable rate variations and experience rapid bursts. This can lead to buffer overflow, even with sophisticated size estimating. Another approach may be to store all the data packets in a single buffer. However, this approach complicates accessing the data packets and increases the complexity of flow control since determining that statistical information about the data packet flows required for such control is difficult to provide..
Accordingly, a node is provided which processes received data packets and creates multiple data packet flows for onward transmission. Flow identification logic is provided which determines a flow characteristic of each of the different data packet flows. A plurality of buffers are provided, each of these buffers being dedicated to a different one of the data packet flows. Buffer control logic is provided which adjusts the size of each buffer in response to the flow characteristic of that data packet flow. In this way, adaptive buffer size control is possible since the size of each buffer can be varied dynamically, based on the flow characteristics of the particular data packet flow. Hence, it can be seen that the size of each buffer no longer needs to be fixed, but instead can vary in response to the flow characteristics. It will be appreciated that the size of the buffers may be increased when required to enable the buffers to avoid overflow, likewise the size of the buffers may be decreased in response to the flow characteristic in order to avoid the unnecessary allocation of resources. Furthermore, by providing a plurality of buffers, each of which buffers a separate data flow, the size of the buffer or other statistical information relating to the buffer which may be required for flow control purposes can readily be established.
In one embodiment, the flow identification logic is operable to determine the flow characteristic of each data packet flow based on a predetermined flow characteristic specified for that data packet flow. Accordingly, the flow identification logic may provide a predetermined or predefined flow characteristic which has been specified for that particular data packet flow. It will be appreciated that whilst this flow characteristic may be provided with the data packet itself, more typically this specified flow characteristic may be received in control information provided by nodes outside of the packet network processing node. For example, if a data flow is a data bearer it may have its rate pre-specified by static flow rate parameters, such as a guaranteed bit rate and/or a maximum bit rate provided as control information when that data bearer is established. This rate may be determined by the flow identification logic which provides it as the flow characteristic for that data packet flow, which may then be used to set the size of the associated buffer for the duration of that data packet flow.

In one embodiment, the flow identification logic is operable to determine the flow characteristic of each data packet flow based on a measured flow characteristic for that data packet flow. Accordingly, the flow identification logic may also determine the flow characteristic based on characteristics of the data packet flow which have been measured. By utilising measured characteristics, it will be appreciated that a much more accurate and responsive assessment of the data packet flow can be made. In turn, a much more responsive and efficient adjustment of the buffer size can likewise be made.

In one embodiment, the flow characteristic comprises a reception flow rate indicative of a rate at which the data packet flow is received by that associated buffer. Accordingly, the rate at which a buffer receives data packets may be used to adjust the size of the buffer. It will be appreciated that using a reception rate will help provide a more accurate assessment of how big the buffer is likely to need to be.

In one embodiment, the flow characteristic comprises a transmission flow rate indicative of a rate at which of the data packet flow is transmitted from that associated buffer. Accordingly, an indication of the rate at which data packets are emptied from a buffer may also be used in the assessment of the likely size of a buffer.

In one embodiment, the flow characteristic comprises a differential flow rate indicative of a difference between the reception flow rate and the transmission flow rate of the data packet flow for that associated buffer. Accordingly, the difference between the input rate and the output rate of data packets within the buffer may be used to control the buffer size. It will be appreciated that a high input rate, but a low output rate may require an increasingly growing buffer, whereas a high output rate but a low input rate may require an increasingly shrinking buffer. Also, it will be appreciated that a high input rate would not necessarily lead to the requirement for a large buffer if the contents of the buffer are being emptied at a similarly high rate. Likewise, it will be appreciated that a low input rate would not necessarily lead to the requirement for a small buffer if the contents of the buffer are being emptied at a lower rate. Accordingly, by using a differential rate a more accurate assessment of the likely buffer size is possible.

In one embodiment, the flow characteristic comprises an occupancy level for that associated buffer. Accordingly, the occupancy level may also or alternatively be utilised in the assessment of the likely buffer size. It will be appreciated that even if a high input or a high differential rate is experienced, the size of the buffer may not need to grow if the occupancy if relatively low. Conversely, even with a low input or a low differential rate, there may be a need to grow the buffer size if its occupancy is high.

In one embodiment, each data packet flow has a quality of service weighting characteristic associated therewith and the buffer control logic is operable to adjust a size of each buffer in response to both the flow characteristic and the quality of service weighting characteristic of that associated data packet flow. Accordingly, the quality of service weighting characteristic may also be factored into the assessment of the buffer size. It will be appreciated that for those data packet flows have a higher quality of service weighting, it may be beneficial to increase the buffer size more than otherwise would be required to reduce the likelihood of any buffer overflow from occurring. Likewise, for those data packet flows have a lower quality of service weighting, it may be beneficial to increase the buffer size less than otherwise would be required since buffer overflow may be less critical. By not allocating resources to data flows having a lower quality of service weighting increases the likelihood that these resources may instead by utilised by buffers associated with data packet flows having a higher quality of service weighting. It will also be appreciated that the quality of service weighting characteristic may be varied dynamically, even during the same data session. For example, an application may be web browsing and the flow rate may initially be very slow with only small bursts occurring. Should the application switch to video streaming then the flow rate may become very high and constant. In this case, the quality of service weighting characteristic may be dynamically upgraded, thereby growing the buffer to help minimise the likelihood of the video data being lost. Should the streaming cease and the application then start to download a file, the rate will be still very high and bursty but the quality of service weighting characteristic can be downgraded and the size of the buffer consequentially reduced.

In one embodiment, the buffer control logic is operable to prevent the size of each buffer from reducing to less than a predetermined minimum size in response to the flow characteristic of that associated data packet flow. Accordingly, should the flow rate drop to zero temporarily, the buffer is maintained at a minimum size in order that further incoming data packets for that data packet flow may still be stored in the buffer, thereby avoiding lost data packets.

In one embodiment, the predetermined minimum size is established based on the quality of service weighting characteristic of that associated data packet flow. Accordingly, the minimum size may differ depending of the quality of service weighting characteristic for that data packet flow. For example, the minimum size may be larger for those data packet flows having a higher quality of service weighting characteristic than those having a lower quality of service weighting characteristic. This helps to minimise the likelihood of high quality of service data packets being lost.

In one embodiment, the flow identification logic is operable to provide an indication of establishment of a new data packet flow and the buffer control logic is operable, in response to the indication, to allocate a further buffer for that new data packet flow. Accordingly, on the birth of a new data packet flow, a further new buffer is allocated to receive data packets for that data packet flow. In this way, it can be seen that buffers are only allocated when a flow is established. It will be appreciated that this helps to minimise the extent of allocated, but unused, resources.

In one embodiment, the flow identification logic is operable to provide an indication of cessation of a data packet flow and the buffer control logic operable, in response to the indication, to terminate that buffer associated with that data packet flow. Accordingly, on the death of a data packet flow, the associated buffer will be deallocated so that the available resources can be used by other data flows. It will be appreciated that this arrangement is particularly useful when each flow is a data bearer which is established or released and the buffer can be allocated on establishment and deallocated on release.

In one embodiment, the buffer control logic operable to adjust the size of each buffer in response to the flow characteristic of that associated data packet flow, subject to a maximum overall size allocatable to the plurality of buffers. Accordingly, the cumulative size allocatable to all of the buffers may be limited to a maximum amount dictated by hardware constraints. The size of each buffer may be adjusted, but this adjustment will be subject to ensuring that the cumulative sum of the sizes of all of the established buffers does not exceed the total size supported by the hardware.

In one embodiment, the buffer control logic is operable when it is determined that the size of each buffer will exceed the maximum overall size allocatable to the plurality of buffers, to increase the size of those buffers associated with those data packet flows indicated by the quality of service weighting characteristic as having a higher quality of service requirement in preference to those buffers associated with those data packet flows indicated by the quality of service weighting characteristic as having a lower quality of service requirement. Accordingly, when the cumulative total of all of the buffer sizes is likely to exceed the maximum available size, an assessment of which buffer size to increase is made based on the relative quality of service weighting characteristics of the different data flows. Those data flows which require an increase in their buffer size may be given precedence over those data flows having a lower quality of service weighting characteristic which also require an increase in buffer size. In this way, the likelihood of more critical data packets being lost can be minimised.

According to a second aspect, there is provided a method of processing received data packets into a plurality of data packet flows for onward transmission, the method comprising: determining a flow characteristic of each data packet flow; buffering data packets in a plurality of buffers, each buffer being operable to buffer data packets associated with a different data packet flow; and adjusting a size of each buffer in response to the flow characteristic of that associated data packet flow.

In one embodiment, the step of determining comprises determining the flow characteristic of each data packet flow based on a predetermined flow characteristic specified for that data packet flow.

In one embodiment, the step of determining comprises determining the flow characteristic of each data packet flow based on a measured flow characteristic for that data packet flow.

In one embodiment, the flow characteristic comprises a reception flow rate indicative of a rate at which the data packet flow is received by that associated buffer.

In one embodiment, the flow characteristic comprises a transmission flow rate indicative of a rate at which of the data packet flow is transmitted from that associated buffer.

In one embodiment, the flow characteristic comprises a differential flow rate indicative of a difference between the reception flow rate and the transmission flow rate of the data packet flow for that associated buffer.

In one embodiment, the flow characteristic comprises an occupancy level for that associated buffer.

In one embodiment, each data packet flow has a quality of service weighting characteristic associated therewith and the step of adjusting comprises adjusting a size of each buffer in response to both the flow characteristic and the quality of service weighting characteristic of that associated data packet flow.

In one embodiment, the method the step of adjusting comprises preventing the size of each buffer from reducing to less than a predetermined minimum size in response to the flow characteristic of that associated data packet flow.

In one embodiment, the predetermined minimum size is established based on the quality of service weighting characteristic of that associated data packet flow.

In one embodiment, the method comprises the steps of providing an indication of establishment of a new data packet flow and allocating a further buffer for that new data packet flow.

In one embodiment, the method comprises the steps of providing an indication of cessation of a data packet flow and, in response to the indication, terminating that buffer associated with that data packet flow.

In one embodiment, the method the step of adjusting comprises adjusting the size of each buffer in response to the flow characteristic of that associated data packet flow, subject to a maximum overall size allocatable to the plurality of buffers.

In one embodiment, the method the step of adjusting comprises, when it is determined that the size of each buffer will exceed the maximum overall size allocatable to the plurality of buffers, increasing the size of those buffers associated with those data packet flows indicated by the quality of service weighting characteristic as having a higher quality of service requirement in preference to those buffers associated with those data packet flows indicated by the quality of service weighting characteristic as having a lower quality of service requirement.

According to a third aspect, there is provided a computer program product operable, when executed on a computer, to perform the method steps of the second aspect.

Further particular and preferred aspects are set out in the accompanying independent and dependent claims. Features of the dependent claims may be combined with features of the independent claims as appropriate, and in combinations other than those explicitly set out in the claims.

## BRIEF DESCRIPTION OF THE DRAWINGS

Embodiments of the present invention will now be described further, with reference to the accompanying drawings, in which:

Figure 1 is a flow chart illustrating the main processing steps of the packet network processing nodes show in Figures 2 and 3;
Figure 2 illustrates the main components of the packet network processing node according to one embodiment; and
Figure 3 illustrates the main components of the packet network processing node according to one embodiment.

## DESCRIPTION OF THE EMBODIMENTS

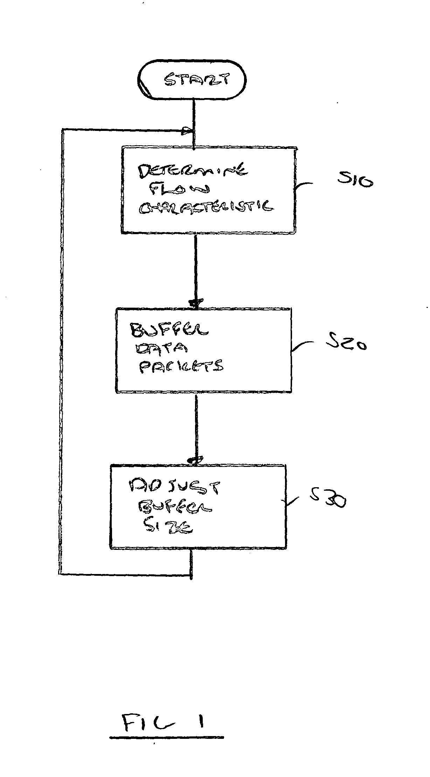

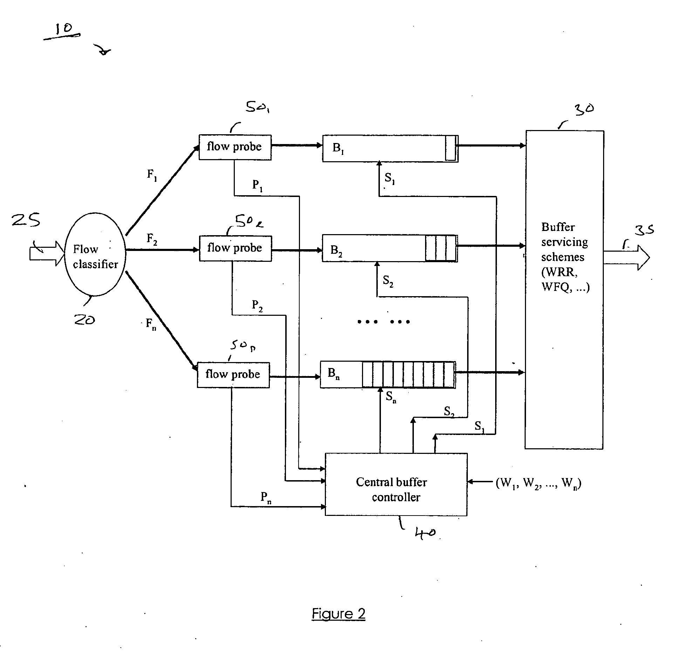

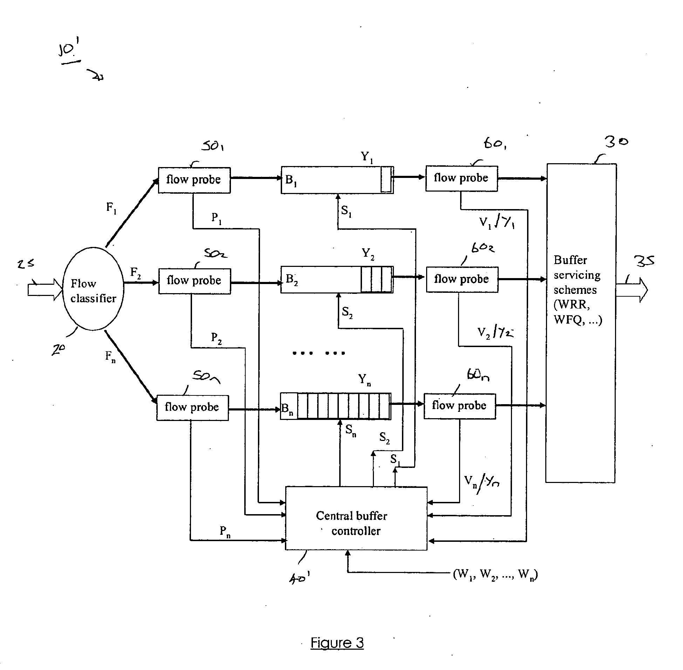

Before discussing embodiments in detail, an overview of the arrangement and operation of a packet network processing node will now be given with reference to Figure 1 which describes the main operating steps of the packet network processing nodes shown in Figures 2 and 3.

The packet network processing node is provided with a finite amount of storage which may be allocated by the central buffer controller to provide a separate buffer for each separate data flow. Each buffer may be allocated on the birth of a new data flow, and then terminated on the death of that data flow.

At step S10, a flow characteristic of each data packet flow is determined. The packet network processing nodes are provided with a central buffer controller which collects flow characteristic information from flow probes and/or from the buffers themselves, together with optional quality of service weighting information, to dynamically control the size of the buffers.

At step S20, the individual data flow buffers buffer the data packets within the data packet flows.

At step S30, the size of each buffer is adjusted based on the flow characteristics.

By providing an adaptive buffer size arrangement which takes account of these characteristics, sufficient buffer size can be dynamically allocated to help minimise the risk of buffer overflow occurring, whilst ensuring that resources are not unnecessarily allocated when they are not required.

Figure 2 illustrates a packet network processing node, generally 10, according to one embodiment. The packet network processing node 10 comprises a flow classifier 20 which receives data packets from other nodes in the network over the link 25. The flow classifier 20 classifies the incoming data packets into an associated data flow $F_1$ to $F_n$. These data flows $F_1$ to $F_n$ are each separately received by an associated buffer $B_1$ to $B_n$ for that data flow. Each buffer $B_1$ to $B_n$ is allocated from finite storage (such as a memory device) provided by the packet network processing node 10 and as will be described in more detail below, the total size of these buffers $B_1$ to $B_n$ is limited by the overall size E of the storage hardware.

Also provided within the packet network processing node 10 is a central buffer controller 40 which dynamically adjusts the size $S_1$ to $S_n$ of each buffer $B_1$ to $B_n$ to provide buffers which are adaptive to the current operating conditions of the packet network processing node 10.

Buffer servicing logic 30 is also provided which services the data flows $F_1$ to $F_n$ stored within the buffers $B_1$ to $B_n$ for onward transmission of those data packets over the link 35 to other packet network processing nodes.

A number of flow probes $50_1$ to $50_n$ are provided, each being associated with a separate data flow $F_1$ to $F_n$ and its associated buffer $B_1$ to $B_n$. Although the flow probes $F_1$ to $F_n$ are shown in Figure 2 as separate entities, it will be appreciated that these may be integrated within the flow classifier 20 since the flow classifier 20 will need to examine each packet for flow classification and could therefore perform the flow analysis. Each flow probe $50_1$ to $50_n$ collects flow statistics $P_1$ to $P_n$ for each flow $F_1$ to $F_n$, typically within a set time interval M. Flow statistics collected by the flow probes $50_1$ to $50_n$ can include the average bit rate, average packet rate, as well as average size for that flow $F_1$ to $F_n$ during the period M. These flow statistics $P_1$ to $P_n$ are provided to the central buffer controller 40. The central buffer controller 40 may also receive quality of service weighting characteristics $W_1$ to $W_n$ which are typically provided over a control channel for each data flow $F_1$ to $F_n$. The quality of service weighing characteristics $W_1$ to $W_n$ can be based on a variety of different parameters such as, for example, DiffServ class and drop precedence, flow priority, user priority, etc. The central buffer controller 40 then calculates the instantaneous buffer size $S_1$ to $S_n$ for each buffer $B_1$ to $B_n$ based on the flow statistics $P_1$ to $P_n$ and the quality of service weighting characteristics $W_1$ to $W_n$, as constrained by the overall size E of the storage hardware.

Accordingly, the instantaneous buffer size, generally $S_i$, is calculated in accordance with the following equation:

$$S_i = W_i C_i$$

where $W_i$ is the quality of service weighing characteristic associated with that data flow and $C_i$ is a calculated base buffer size for that data flow $F_i$ determined in accordance with one of two different schemes, a semi dynamic scheme and a fully dynamic scheme, as will be discussed in more detail below.

In any event, the instantaneous buffer size of each buffer must satisfy the following equation:

$$\sum_{i=1}^{n} S_i \leq E$$

It will be appreciated that the buffer size $S_i$ can either be bits-based or packets-based depending on the buffer hardware sizing requirement.

Each buffer $B_1$ to $B_n$ is allocated when it is determined that a new data flow $F_1$ to $F_n$ is established (i.e. a flow birth occurs). When the flow diminishes (i.e. a flow death) the associated buffer will be deallocated and the space $E$ within the storage hardware can then be used by other buffers to store their associated data flows.

Semi dynamic allocation scheme

This scheme is particularly useful when each data flow $F_1$ to $F_n$ is a data bearer which has its flow rate $P_1$ to $P_n$ specified by static flow rate parameters such as, for example, a guaranteed bit rate (GBR) and/or a maximum bit rate (MBR). During call admission control, a flow probe $50_1$ to $50_n$ detects the establishment of a new data flow as part of the call setup process. The flow probe determines either from the data packets themselves or from control channels associated with the call setup a guaranteed bit rate and/or maximum bit rate required for that data bearer. The central buffer controller 40 will then allocate a buffer on call setup based on these specified bit rates. If the buffer allocation is bits-based, then the base size $C_i$ of the buffer can be calculated as:

$$C_i = T_i R_i$$

where $T_i$ is the buffering time requirement for each flow (this is the minimum time which a packet shall be able to stay in the buffer if the buffer can not be drained and thus overflows) and $R_i$ is one example of $P_i$ and represents the guaranteed bit rate and/or maximum bit rate.

Once again, the total size allocateable to each buffer is limited by the following equation:

$$\sum_{i=1}^{n} W_i T_i R_i \leq E$$

If the buffer allocation is instead packet-based, then the equation can be applied using $E$ as the total packet space of the hardware and $R_i$ is the packet rate for each flow. If only the bit rate (GBR and/or MBR) is given or each flow, the packet rate can be determined either by providing the assumed average packet size or by using the flow probe to provide an accurate average packet size.

Accordingly, it can be seen that the buffer size $S_i$ in the semi-dynamic allocation scheme is established at the birth of each data flow based on predetermined information provided relating to the expected bit rate or packet rate of that data flow. The buffers are then terminated on death of the data flow.

Full dynamic allocation scheme

In this scheme, as before, buffers $B_1$ to $B_n$ are allocated when a flow $F_1$ to $F_n$ is established and, when the flow diminishes or dies, the buffer will be deallocated and the space $E$ within the hardware can be used by buffers for other data flows. However, in this scheme, each buffer size $S_1$ to $S_n$ is updated after the set time interval $M$ when the flow probes $50_1$ to $50_n$ report the flow characteristics $P_1$ to $P_n$ currently being experienced for each data flow $F_1$ to $F_n$.

This scheme effectively causes the buffers $B_1$ to $B_n$ to expand and to shrink dynamically, on-demand as the

data flows $F_1$ to $F_n$ change. This is very effective when the data flow $F_i$ has very different characteristics during the same data session. For example, as mentioned above, when an application is web browsing the flow rate $P_i$ can initially be very low and only small data bursts may occur. However, when the application changes to video streaming, the flow rate $P_i$ can become high and relatively constant. A switch to video streaming may cause an increase in the quality of service weighting $W_i$ for that data flow $F_i$. When the application ceases video streaming and starts to download a large file, the rate $P_i$ will be very high and bursty, but the quality of service weighting $W_i$ may then be downgraded. In this scheme, the buffer size allocation is made in accordance with the following equation:

$$\sum_{i=1}^{n} W_i(T_i R_i + A_i) \le E$$

It can be seen that this is a modification of the semi dynamic scheme where $T_i$ is the buffering time requirement for each flow, $R_i$ is the measured flow rate and is one example of $P_i$, and A is a base buffer size.

The base buffer size A is provided since the measured flow rate $R_i$ can drop to zero temporarily, which would otherwise lead to the buffer size $S_i$ being adjusted to zero. By providing a base buffer size $A_i$, it can be ensured that a minimum buffer size is maintained for each.data flow $F_i$. It will be appreciated that this minimum base buffer size $A_i$ may be set depending on the quality of service weighting W; for that data flow $F_i$.

In this way, it can be seen that the full dynamic allocation scheme updates buffer size $S_i$ not only when a flow is established or released, but also periodically after each flow probe reporting time interval M. Also, not only can the quality of service weighting $W_i$ be adjusted dynamically, the buffering time $T_i$ can be fully dynamic as well to be updated every interval M. This is particularly useful when the outgoing link, such as a mobile station interface, exhibits delay variance.

Figure 3 illustrates a packet network processing node, generally 10', according to a second embodiment. This arrangement shares similar features to that of Figure 2 and like references are used for the like features. The main difference of this embodiment is the inclusion of a second set of flow probes $60_1$ to $60_n$ which report the buffer servicing rate, $V_1$ to $V_n$ using the same time interval M as the input flow probes $50_1$ to $50_n$. These output flow probes $60_1$ to $60_n$, in conjunction with the input flow probes $50_1$ to $50_n$, are able to provide differential flow characteristics which are used by a central buffer controller 40' to adjust the size of the buffer $B_1$ to $B_n$. Differential flow rates can be used to make buffer sizing even more efficient. For example, a large buffer is not necessarily allocated when a large input flow rate is experienced, if an equally large output flow rate is also experienced. Likewise, a small buffer is not necessarily allocated when a small input flow rate is experienced, if an even smaller output flow rate is also experienced. Accordingly, the size $S_i$ of the buffer Bi determined by the central buffer controller 40' can be determined in accordance with the equation:

$$\sum_{i=1}^{n} W_i\left[T_i(R_i - V_i) + A_i\right] \le E$$

where $R_i$ is the input flow rate, $V_i$ the output flow rate, $A_i$ is the base buffer size, $T_i$ is the buffering time and $W_i$ the quality of service weighting characteristic.

Since it is possible that the output flow rate may exceed the input flow rate ($V_i$ may be greater than $R_i$) temporarily, a minimum differential value of zero will be used in those circumstances (i.e. $R_i - V_i = 0$ in those circumstances).

Since the rate difference is used in this scheme, the parameters $T_i$, $W_i$ and A; may be allocated as smaller values than the previous arrangements to ensure that larger buffers than that of for the full dynamic scheme are not allocated.

Alternatively or additionally, since buffer occupancy $Y_i$ often needs to be reported, the output flow probe $60_i$ to $60_n$ can be provided with such buffer occupancy reporting logic and provide occupancy levels $Y_i$ as well as or instead of outgoing flow rate V;. In that arrangement, the buffer size is calculated in accordance with following equation:

$$\sum_{i=1}^{n} W_i\left[T_i R_i + Y_i + A_i\right] \le E$$

It can be seen that with these approaches it is possible to allocate buffer space more efficiently using on-demand allocation by using information relating to the flow rates of data flows, as well as taking into account weighting factors of each flow based on quality of service requirements. This enables efficient use of a finite amount of buffer space, yet still enables knowledge of the actual buffer size to be provided at any point in time, which is needed for precise flow control (e.g. by knowing an actual buffer size it is possible to determine an occupancy level's relationship with any particular defined thresholds).

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

**Claims**

1. A packet network processing node for processing received data packets into a plurality of data packet flows for onward transmission, said packet network processing node comprising:

   flow identification logic operable to determine a flow characteristic of each data packet flow;
   a plurality of buffers, each buffer being operable to buffer data packets associated with a different data packet flow; and
   buffer control logic operable to adjust a size of each buffer in response to said flow characteristic of that associated data packet flow.

2. The packet network processing node of claim 1, wherein said flow identification logic is operable to determine said flow characteristic of each data packet flow based on a predetermined flow characteristic specified for that data packet flow.

3. The packet network processing node of claim 1 or 2, wherein said flow identification logic is operable to determine said flow characteristic of each data packet flow based on a measured flow characteristic for that data packet flow.

4. The packet network processing node of any preceding claim, wherein said flow characteristic comprises a reception flow rate indicative of a rate at which said data packet flow is received by that associated buffer.

**5.** The packet network processing node of any preceding claim, wherein said flow characteristic comprises a transmission flow rate indicative of a rate at which of said data packet flow is transmitted from that associated buffer.

**6.** The packet network processing node of any preceding claim, wherein said flow characteristic comprises a differential flow rate indicative of a difference between said reception flow rate and said transmission flow rate of said data packet flow for that associated buffer.

**7.** The packet network processing node of any preceding claim, wherein said flow characteristic comprises an occupancy level for that associated buffer.

**8.** The packet network processing node of any preceding claim, wherein each data packet flow has a quality of service weighting characteristic associated therewith and said buffer control logic is operable to adjust a size of each buffer in response to both said flow characteristic and said quality of service weighting characteristic of that associated data packet flow.

**9.** The packet network processing node of any preceding claim, wherein said buffer control logic is operable to prevent said size of each buffer from reducing to less than a predetermined minimum size in response to said flow characteristic of that associated data packet flow.

**10.** The packet network processing node of claim 9, wherein said predetermined minimum size is established based on said quality of service weighting characteristic of that associated data packet flow.

**11.** The packet network processing node of any preceding claim, wherein said flow identification logic is operable to provide an indication of establishment of a new data packet flow and said buffer control logic is operable, in response to said indication, to allocate a further buffer for that new data packet flow.

**12.** The packet network processing node of any preceding claim, wherein said flow identification logic is operable to provide an indication of cessation of a data packet flow and said buffer control logic operable, in response to said indication, to terminate that buffer associated with that data packet flow.

**13.** The packet network processing node of any preceding claim, wherein said buffer control logic operable to adjust said size of each buffer in response to said flow characteristic of that associated data packet flow, subject to a maximum overall size allocatable to said plurality of buffers.

**14.** The packet network processing node of claim 13, wherein said buffer control logic is operable when it is determined that said size of each buffer will exceed said maximum overall size allocatable to said plurality of buffers, to increase said size of those buffers associated with those data packet flows indicated by said quality of service weighting characteristic as having a higher quality of service requirement in preference to those buffers associated with those data packet flows indicated by said quality of service weighting characteristic as having a lower quality of service requirement.

**15.** A method of processing received data packets into a plurality of data packet flows for onward transmission, said method comprising:

determining a flow characteristic of each data packet flow;
buffering data packets in a plurality of buffers, each buffer being operable to buffer data packets associated with a different data packet flow; and
adjusting a size of each buffer in response to said flow characteristic of that associated data packet flow.

**Amended claims in accordance with Rule 137(2) EPC.**

**1.** A packet network processing node (10; 10') for processing received data packets into a plurality of data packet flows for onward transmission, said packet network processing node comprising:

flow identification logic ($50_1$-$50_n$) operable to determine a flow characteristic of each data packet flow ($F_1$-$F_n$) said flow characteristic comprising a reception flow rate indicative of a rate at which said data packet flow is received by that associated buffer;

a plurality of buffers ($B_1$-$B_n$), each buffer being operable to buffer data packets associated with a different data packet flow; and

buffer control logic operable to adjust a size of each buffer in response to said flow characteristic of that associated data packet flow.

**2.** The packet network processing node of claim 1, wherein said flow identification logic is operable to determine said flow characteristic of each data packet flow based on a predetermined flow characteristic specified for that data packet flow.

**3.** The packet network processing node of claim 1 or 2, wherein said flow identification logic is operable to determine said flow characteristic of each data packet flow based on a measured flow characteristic for that data packet flow.

**4.** The packet network processing node of any preceding claim, wherein said flow characteristic comprises a transmission flow rate indicative of a rate at which of said data packet flow is transmitted from that associated buffer.

**5.** The packet network processing node of claim 4, wherein said flow characteristic comprises a differential flow rate indicative of a difference between said reception flow rate and said transmission flow rate of said data packet flow for that associated buffer.

**6.** The packet network processing node of any preceding claim, wherein said flow characteristic comprises an occupancy level for that associated buffer.

**7.** The packet network processing node of any preceding claim, wherein each data packet flow has a quality of service weighting characteristic associated therewith and said buffer control logic is operable to adjust a size of each buffer in response to both said flow characteristic and said quality of service weighting characteristic of that associated data packet flow.

**8.** The packet network processing node of any preceding claim, wherein said buffer control logic is operable to prevent said size of each buffer from reducing to less than a predetermined minimum size in response to said flow characteristic of that associated data packet flow.

**9.** The packet network processing node of claim 9, wherein said predetermined minimum size is established based on said quality of service weighting characteristic of that associated data packet flow.

**10.** The packet network processing node of any preceding claim, wherein said flow identification logic is operable to provide an indication of establishment of a new data packet flow and said buffer control logic is operable, in response to said indication, to allocate a further buffer for that new data packet flow.

**11.** The packet network processing node of any preceding claim, wherein said flow identification logic is operable to provide an indication of cessation of a data packet flow and said buffer control logic operable, in response to said indication, to terminate that buffer associated with that data packet flow.

**12.** The packet network processing node of any preceding claim, wherein said buffer control logic operable to adjust said size of each buffer in response to said flow characteristic of that associated data packet flow, subject to a maximum overall size allocatable to said plurality of buffers.

**13.** The packet network processing node of claim 13, wherein said buffer control logic is operable when it is determined that said size of each buffer will exceed said maximum overall size allocatable to said plurality of buffers, to increase said size of those buffers associated with those data packet flows indicated by said quality of service weighting characteristic as having a higher quality of service requirement in preference to those buffers associated with those data packet flows indicated by said quality of service weighting characteristic as having a lower quality of service requirement.

**14.** A method of processing received data packets into a plurality of data packet flows ($F_1$-$F_n$) for onward transmission, said method comprising the steps of:

determining a flow characteristic of each data packet flow, said flow characteristic comprising a reception flow rate indicative of a rate at which said data packet flow is received by an associated buffer;

buffering data packets in a plurality of buffers ($B_1$-$B_n$), each buffer being operable to buffer data packets associated with a different data packet flow; and
adjusting a size of each buffer in response to said flow characteristic of that associated data packet flow.

**15.** A computer program product operable, when executed on a computer, to perform the method steps of claim 14.

START

DETERMINE
FLOW
CHARACTERISTIC — S10

BUFFER
DATA
PACKETS — S20

ADJUST
BUFFER
SIZE — S30

FIG 1

Figure 2

Figure 3

EP 2 247 044 A1

Europäisches
Patentamt
European
Patent Office
Office européen
des brevets

# EUROPEAN SEARCH REPORT

Application Number

EP 09 36 0023

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 901 147 A (JOFFE ALEXANDER [US]) 4 May 1999 (1999-05-04) | 1-4,6-15 | INV. H04L12/56 |
| Y | * abstract * <br> * column 1, line 5 - column 2, line 17 * <br> * column 3, lines 18-49 * <br> * claims 1,8,9,13,20,23,26,29,31 * <br> * figure 1 * | 5 | |
| Y | EP 1 249 972 A (ERICSSON TELEFON AB L M [SE]) 16 October 2002 (2002-10-16) | 5 | |
| A | * abstract * <br> * page 2, paragraph 1 * <br> * page 3, paragraph 20 - page 4, paragraph 33 * <br> * claims 1,5,35 * <br> * figures 1,2 * | 1-4,6-15 | |
| A | EP 0 872 988 A (LUCENT TECHNOLOGIES INC [US]) 21 October 1998 (1998-10-21) <br> * abstract * <br> * column 1, lines 10-15 * <br> * column 3, lines 10-45 * <br> * column 4, lines 12-53 * <br> * claims 1,4,6,9,10 * <br> * figures 2-3B * | 1-15 | TECHNICAL FIELDS SEARCHED (IPC) <br> H04L |
| A | US 7 047 312 B1 (AWEYA JAMES [CA] ET AL) 16 May 2006 (2006-05-16) <br> * abstract * <br> * column 1, lines 14-19 * <br> * column 2, line 34 - column 4, line 9 * <br> * claims 1,10,16 * <br> * figure 1 * | 1-15 | |

-/--

The present search report has been drawn up for all claims

| Place of search | Date of completion of the search | Examiner |
|---|---|---|
| Munich | 31 July 2009 | Schrembs, Gerd |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

Europäisches
Patentamt

European
Patent Office

Office européen
des brevets

## EUROPEAN SEARCH REPORT

Application Number

EP 09 36 0023

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 5 864 538 A (CHONG SONG [US] ET AL) 26 January 1999 (1999-01-26) * abstract * * column 1, lines 5-9 * * column 1, line 56 - column 2, line 55 * * claim 1 * * figure 1 * | 1-15 | |

TECHNICAL FIELDS
SEARCHED       (IPC)

The present search report has been drawn up for all claims

| Place of search | Date of completion of the search | Examiner |
|---|---|---|
| Munich | 31 July 2009 | Schrembs, Gerd |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**ANNEX TO THE EUROPEAN SEARCH REPORT
ON EUROPEAN PATENT APPLICATION NO.**

EP 09 36 0023

This annex lists the patent family members relating to the patent documents cited in the above-mentioned European search report.
The members are as contained in the European Patent Office EDP file on
The European Patent Office is in no way liable for these particulars which are merely given for the purpose of information.

31-07-2009

| Patent document cited in search report | | Publication date | Patent family member(s) | | Publication date |
|---|---|---|---|---|---|
| US 5901147 | A | 04-05-1999 | DE | 69731606 D1 | 23-12-2004 |
| | | | DE | 69731606 T2 | 07-04-2005 |
| | | | EP | 0864244 A1 | 16-09-1998 |
| | | | JP | 11502397 T | 23-02-1999 |
| | | | WO | 9809475 A1 | 05-03-1998 |
| EP 1249972 | A | 16-10-2002 | CN | 1531804 A | 22-09-2004 |
| | | | WO | 02082747 A2 | 17-10-2002 |
| | | | JP | 4082669 B2 | 30-04-2008 |
| | | | JP | 2004532566 T | 21-10-2004 |
| | | | US | 2004111541 A1 | 10-06-2004 |
| EP 0872988 | A | 21-10-1998 | CA | 2227244 A1 | 07-08-1998 |
| | | | DE | 69834763 T2 | 14-06-2007 |
| | | | JP | 3698884 B2 | 21-09-2005 |
| | | | JP | 10233802 A | 02-09-1998 |
| | | | JP | 2005295581 A | 20-10-2005 |
| | | | US | 6092115 A | 18-07-2000 |
| US 7047312 | B1 | 16-05-2006 | NONE | | |
| US 5864538 | A | 26-01-1999 | NONE | | |

For more details about this annex : see Official Journal of the European Patent Office, No. 12/82